(19) Europäisches Patentamt
European Patent Office
Office européen des brevets

(11) EP 1 408 098 B1

(12) EUROPEAN PATENT SPECIFICATION

(45) Date of publication and mention of the grant of the patent:
**28.12.2005 Bulletin 2005/52**

(51) Int Cl.[7]: **C09K 19/20**, C09K 19/04

(21) Application number: **03020911.8**

(22) Date of filing: **16.09.2003**

(54) **Liquid crystalline medium and liquid crystal display**

Flüssigkristallines Medium und Flüssigkristallanzeige

Milieu liquide cristallin et dispositif d'affichage à cristaux liquides

(84) Designated Contracting States:
**AT BE BG CH CY CZ DE DK EE ES FI FR GB GR HU IE IT LI LU MC NL PT RO SE SI SK TR**

(30) Priority: **08.10.2002 EP 02022328**

(43) Date of publication of application:
**14.04.2004 Bulletin 2004/16**

(73) Proprietor: **Merck Patent GmbH**
**64293 Darmstadt (DE)**

(72) Inventor: **Ionescu, Doina, Dr.**
**Southampton Hampshire SO17 1ED (GB)**

(56) References cited:
**EP-A- 0 281 341**
**EP-A- 0 971 016**
**DE-A- 10 112 769**
**GB-A- 2 356 629**
**GB-A- 2 387 603**
**US-A- 4 818 076**
**US-A- 4 988 458**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 408 098 B1

## Description

### Field of the invention

The present invention relates to liquid crystal displays exploiting the flexoelectric effect in chiral nematic liquid crystals and in particular to the method of orientation of the liquid crystal materials for operation in the uniformly lying helix mode.

### State of the art and problem to be solved

Liquid Crystal Displays (LCDs) are widely used to display information. Electro-optical modes employed are e.g. the twisted nematic (TN)-, the super twisted nematic (STN)-, the optically compensated bend (OCB)- and the electrically controlled birefringence (ECB)-mode with their various modifications, as well as others. Besides these modes, which all do use an electrical field which is substantially perpendicular to the substrates, respectively to the liquid crystal layer, there are also electro-optical modes employing an electrical field substantially parallel to the substrates, respectively the liquid crystal layer, like e.g. the In-Plane Switching (IPS) mode, as disclosed e.g. in DE 40 00 451 and EP 0 588 568. Especially this electro-optical mode is used for LCDs for modern desk top monitors. In IPS displays, like in Ferroelectric Liquid Crystal Displays (FLCDs), the liquid crystals are switching their axis of preferred orientation in the plane of the display. Thus there is almost no birefringence change during switching and consequently the optical effect is colour neutral.

Displays using the flexoelectric effect in cholesteric liquid crystals in the Uniformly Lying Helix texture have been proposed (Phys. Rev. Lett. **58** (15), p. 1538-1540 (1987)). Throughout this application the terms chiral nematic and cholesteric are used synonymously, unless explicitly stated otherwise. The flexoelectric effect itself is known from Meyer (Phys. Rev. Lett. **22**, p. 918 ff (1969)) and has more recently been reviewed by Rudquist et al. (Liq. Cryst. **22** (4), 445-449 (1997).

Liquid crystal compositions with short cholesteric pitch for flexoelectric devices are known from EP 0 971 016, GB 2 356 629 and Coles et al., J. Mater. Chem., **11,** p. 2709-2716 (2001). EP 0 971 016 teaches mesogenic estradiols, which, as such, have a high flexoelectric coefficient. GB 2 356 629 teaches bimesogenic compounds and their use in flexoelectric devices.

In the uniform lying helix (ULH) texture a cholesteric liquid crystal with a short pitch is unidirectionally aligned with its helical axis parallel to the substrates, e. g. glass plates, of a liquid crystal cell. The helical axis of the cholesteric liquid crystal is equivalent to the optical axis of a birefringent plate. The uniformly lying helix texture generally is realized using a chiral nematic liquid crystal with a short pitch, typically in the range from 0.2 µm to 1.0 µm, preferably of 1.0µm or less, in particular of 0.5 µm or less.

If an electrical field is applied to electrodes on the substrates, preferably on their inner surfaces, in this configuration, i.e. normal to the helical axis, the optical axis is rotated in the plane of the cell. This rotation is similar to the rotation of the director of a ferroelectric liquid crystal in a surface stabilized ferroelectric liquid crystal display. The flexoelectric effect is characterised by fast response times, typically in the range from 60 µs to 100 µs. It further features excellent grey scale capability.

The electric field can be seen to essentially couple flexoelectrically to the induced splay-bend deformation of the director. The angle of the rotation of the axis, in first approximation, is directly and linearly proportional to the strength of the electrical field. The optical effect can be observed best, when the liquid crystal cell is placed between crossed polarisers with the optical axis in the unpowered state at an angle of 22.5° to the absorption axis of one of the polarisers. This angle of 22.5° also is the ideal angle of rotation of the of the helical axis with the electric field, as thus, by the inversion the electrical field, the optical axis is rotated by 45° and by appropriate selection of the relative orientations of the preferred direction of the axis of the helix, the absorption axis of the polariser and the direction of the electric field, the optical axis can be switched from parallel to one polariser to the centre angle between both polarisers. The optimum contrast is achieved when the total angle of the switching of the optical axis is 45°. In that case the arrangement can be used as a switchable quarter wave plate, provided the optical retardation, i. e. the product of the effective birefringence of the liquid crystal and the cell gap, is selected to be the quarter of the wavelength. In this context the wavelength referred to is 550 nm, the wavelength for which the sensitivity of the human eye is highest, unless explicitly stated otherwise.

The angle of rotation of the optical axis (ϕ) is given in good approximation by formula (1).

$$\tan \phi = \bar{e}\ P_0 E / (2\ \pi\ K) \qquad (1)$$

wherein

$P_0$ is the undisturbed pitch of the chloesteric liquid crystal,
$\bar{e}$ is the average [$\bar{e} = ½ (e_{splay} + e_{bend})$] of the splay flexoelectric coefficient ($e_{splay}$) and the bend flexoelectric coefficient ($e_{bend}$),
E is the electrical field strength and
$K$ is the average [$K = ½ (k_{11} + k_{33})$] of the splay elastic constant ($k_{11}$) and the bend elastic constant ($k_{33}$)

and wherein the ratio

$\bar{e}/K$ is called the flexo-elastic ratio.

This angle of rotation (ϕ) is half the switching angle in a flexoelectric switching element.
The response time (τ) of this electro-optical effect is given in good approximation by formula (2).

$$\tau = [P_0(2\pi)]^2 \cdot \gamma/K \quad (2)$$

wherein

γ is the effective viscosity coefficient associated with the distortion of the helix.

There is a critical field ($E_c$) to unwind the helix, which can be obtained from equation (3).

$$E_c = (\pi^2 / P_0) \cdot [k_{22}/(\varepsilon_0.\Delta\varepsilon)]^{1/2} \quad (3)$$

wherein

$k_{22}$ is the twist elastic constant,
$\varepsilon_0$ is the permittivity of vacuum and
$\Delta\varepsilon$ is the dielectric anisotropy of the liquid crystal.

A chiral substance mixed with a nematic material induces a helical twist transforming the material into a chiral nematic material, which is equivalent to a cholesteric material. The terms chiral nematic and cholesteric are used synonymously in this application, unless explicitly stated otherwise. One difference between a cholesteric pure material and a chiral nematic mixture, however, is the fact, that the cholesteric pitch of the latter can be varied over a rather large range with comparative ease. The pitch induced by the chiral substance is in a first approximation inversely proportional to the concentration of the chiral material used. The constant of proportionality of this relation is called the helical twisting power (HTP) of the chiral substance and defined by equation (4)

$$HTP \equiv 1 / (c \cdot P_0) \quad (4)$$

wherein

c is concentration of the chiral compound.

For these displays new liquid crystalline media with improved properties are required. Especially the birefingence (Δn) should be optimised for the optical mode. I.e. the optical retardation (d·Δn) should be preferably such that the equation (5)

$$\sin^2(\pi \cdot d \cdot \Delta n/\lambda) = 1 \quad (5)$$

wherein

d is the cell gap and
λ is the wavelength of light

is satisfied. The allowance of deviation for the right hand side of equation (4) is +/- 3%.

The wavelength of light generally referred to in this application is 550 nm, unless explicitly specified otherwise.

Flexoelectric displays using the ULH-mode, like in plane switching and ferroelectric displays, inherently have a black and white response with a very wide viewing angle. Thus, the colour representation is almost independent of the angle of observation. This fact positively contrasts from the situation for displays exploiting birefringent effects, like TN, STN and ECB displays.

Compared to IPS displays, flexoelectric displays are characterized by their extremely fast response time, whereas compared to FLCDs, they are preferred, as they allow direct representation of grey scales, having a voltage dependent switching angle and are not showing bistable response as in the case of FLCDs.

However, so far, there has been a problem to achieve the orientation of the cholesteric liquid crystals in the uniaxially lying helix texture in a well reproducible way. Coles et al., J. Mater. Chem., 2001, **11**, pp. 2709-2716, mentioned above, reports that monomesogenic liquid crystals containing a chiral additive, which exhibit blue phases promote the easy formation of the uniaxially lying helix texture. When such materials are enclosed in liquid crystal cells between two walls, at least one of which is provided with an alignment layer for planar alignment, they spontaneously form a uniformly lying helix texture upon application of an alternating electrical field across the material while it is in its blue phase. Subsequently the sample is cooled into the cholesteric phase under the applied field. In this case no mechanical manipulation, like shearing the liquid crystal sample, is required to obtain the uniform alignment. However, this reference only discloses only cholesteric liquid crystal materials based on monomesogenic liquid crystal materials but does not even mention bimesogenic liquid crystals.

It further has been reported by Blatch et al., J. Mater. Chem., 1997, **7**(1), pp. 9-17, that liquid crystal materials comprising bimesogenic liquid crystals with an odd number of atoms in the spacer group, which are further comprising a chiral centre sufficient to achieve a helical pitch of 500 nm or less, do generally exhibit blue phases.

Thus, there is a significant need for liquid crystalline media with fast switching i.e. small response times for practical applications such as e.g. computer monitors, screens for television sets and the like, displays for multi media applications, hand held tele-communication devices automatic teller machines and light modulators. They have to have a wide nematic phase range, low viscosities, a low $\Delta\varepsilon$, high flexoelectric coefficients, a sufficiently high resistivity and, in particular, an appropriately optimised optical anisotropy $\Delta n$-for a given cell thickness depending on the display mode used.

<u>Present invention</u>

The liquid crystal displays according to the present invention are using the flexoelectric effect in chiral nematic devices that are oriented in the ULH texture. They are preferably used in displays or in electro-optical devices like switches for light or they are used e.g. in optical components.

The cell gap of the cells preferably is in the range from 1 μm to 20 μm, in particular with in the range from 2.0 μm to 10 μm.

Preferably the displays according to the present invention are addressed by an active matrix i.e. a matrix of active electrical elements with a nonlinear current - voltage characteristic. These active elements preferably are thin film transistors (TFTs). They can be used for direct view applications as well as for projection type displays. However, the inventive liquid crystals can also beneficially be used in displays with other known addressing means.

Surprisingly, it now has been found, that chiral nematic liquid crystalline media can be aligned in the ULH texture upon application of an alternating electrical field by using an intrinsically non-symmetric system.

This non-symmetry can be easily introduced into the system in the following ways. In a first preferred embodiment the inner surfaces of the substrates of the display are treated to align liquid crystals in a Hybrid alignment. This means that one surface induces planar alignment, also called homogeneous alignment, whereas the other surface induces homeotropic alignment. Obviously in both alignments the liquid crystals may exhibit a finite surface tilt angle.

These displays according to the present invention do not exhibit the drawbacks of the displays of the prior art or at least do exhibit them to a significantly lesser degree.

Preferably the liquid crystalline materials used in the displays according to the present invention have an induced chiral nematic phase.

The base mixtures of the liquid crystalline media preferably have a positive dielectric anisotropy, in order to further the alignment of the axis of the helix in the plane of the cell. However, at the same time, the dielectric anisotropy of the base mixture should be limited, as otherwise there would be an undesired dielectric unwinding of the helix upon application of the electrical field instead of the desired flexoelectric switching of the axis of the helix.

The dielectric anisotropy of the liquid crystalline mixture preferably is in the range from 0 or more to 10 or less and in particular from 0,1 or more to 5 or less.

The unwinding voltage for the helical structure of the mixture is typically 30V or more, preferably 50V or more for a 5μm thick cell at the operating temperature.

The switching angle for the liquid crystalline mixture is typically 5° or more, preferably 10° or more, more preferably 15° or more, and especially 22.5° for a voltage of typically 10V or more, for 5µm cell thickness, at the operating temperature.

The improved liquid crystalline displays according to the instant application fulfil the following conditions. They comprise

- a pair of substrates
    - each bearing one or more electrodes and
    - at least one of them bearing an orientation layer for planar alignment of liquid crystals or being otherwise treated for planar orientation of liquid crystals,
- a cholesteric liquid crystal material comprising
    - a component A, comprising one or more bimesogenic compounds with an odd or even, preferably odd number of atoms in the spacer group between the two mesogenic units and with a non-symmetric structure,
    - a chiral component, component B, consisting of one or more compounds, wherein
    - the cholesteric liquid crystal material is aligned in a uniformly lying helix structure with a helical pitch preferably lower than 500 nm, more preferably lower than 400 nm, most preferably lower than 300 nm or less and are characterised in that the following conditions are satisfied
- both substrates are bearing an orientation layer for planar alignment of liquid crystals or being otherwise treated for planar alignment of liquid crystals.

Preferably the chiral component, component B, consists of one or more chiral compounds.

Preferably the bimesogenic component, component A comprises one or more compounds selected from the group of formulae I-1 to I-3

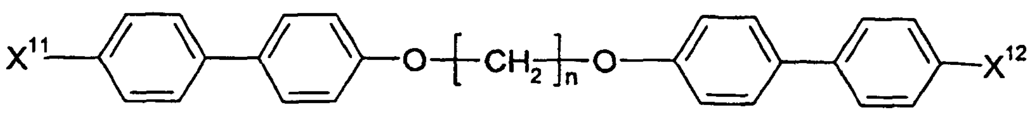

I-1

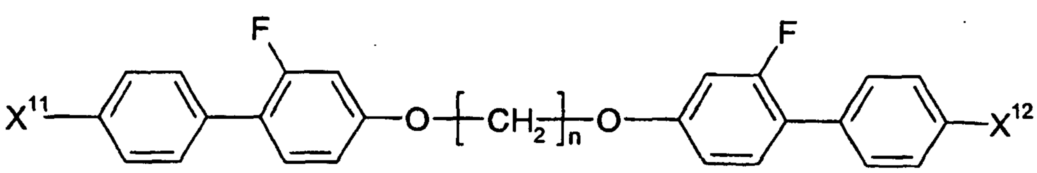

I-2

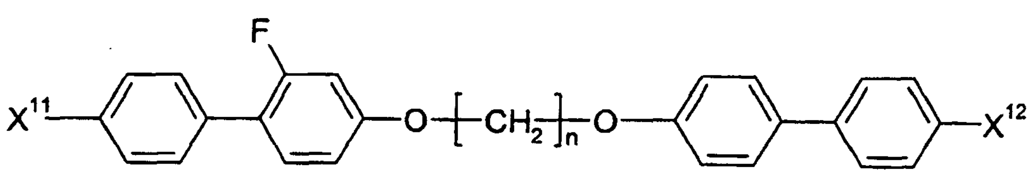

I-3

wherein

$X^{11}$ and $X^{12}$, independently of each other are CN, F, Cl or fluorinated alkyl or fluorinated alkoxy, each with 1 to 4 C-atoms, preferably CN, F or Cl, most preferably CN or F, with the condition that in formulae I-1 and I-2 $X^{11}$ and $X^{12}$ are different from each other, and

n is an odd integer in the range from 3 to 17, preferably from 5 to 13.

Optionally the bimesogenic component, component A comprises one or more compounds selected from the group of formulae I'-1 to I'-3, which are almost identical with the respective formulae I-1 to I-3 given above, wherein the parameters have the meanings given above, which, however are different in that $X^{11}$ and $X^{12}$ are identical in formulae I'-1 and I'-2 and/or n is an even integer in the range from 2 to 18.

Optionally the bimesogenic component, component A comprises one or more compounds of formula IIa, preferably one ore more compounds each of at least two different formulae selected from the group of formulae II-1 and II-2

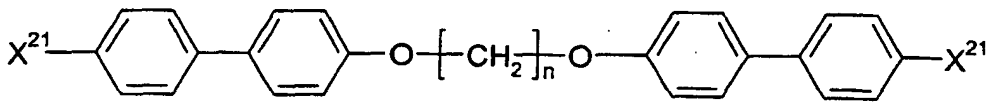

II-1

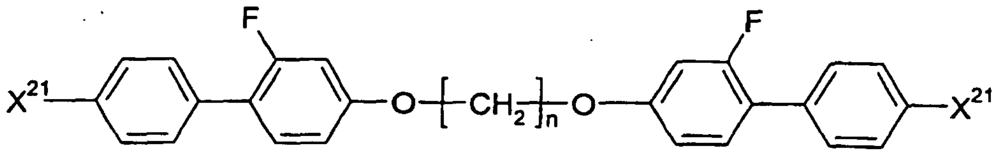

II-2

wherein

$X^{21}$ and $X^{22}$, have the meaning given for $X^{11}$ and $X^{12}$ under formulae I'-1 to I'3 above and

n is an integer in the range from 2 to 18.

Preferably the chiral component, component B comprises one or more compounds of formula III

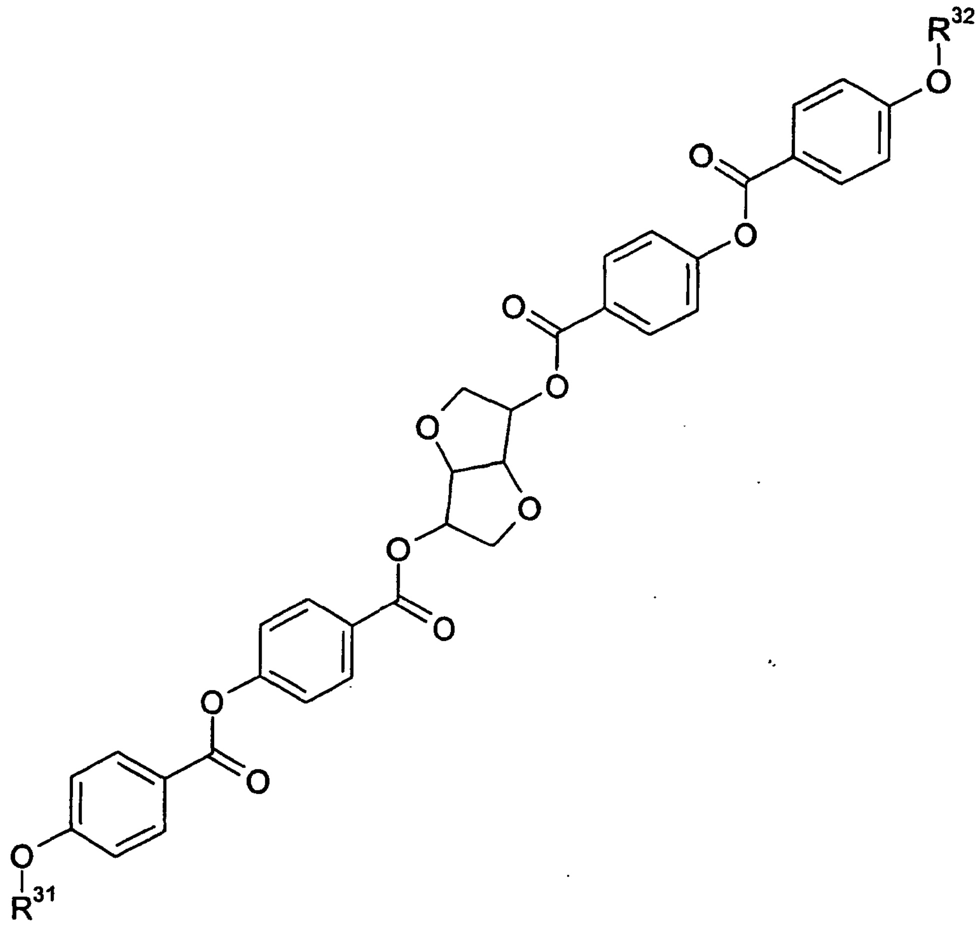

III

wherein

$R^{31}$ and $R^{32}$, independently of each other are alkyl or alkoxy, each with 1 to 17 C-atoms or alkenyl, alkenyloxy or oxaalkyl, each with 2 to 17 C-atoms, al of which optionally may be fluorinated, preferably $R^{31}$ and $R^{32}$ are identical to each other and most preferably they are n-alkyl.

one or more of the phenyl rings optionally may be fluorinated.

The improved liquid crystalline displays according to a preferred embodiment of the instant invention comprise a chiral component (component B) which induces a cholesteric pitch of the liquid crystal material of 500 nm or less, preferably of 450 nm or less and especially preferred of 400 nm or less.

In a further preferred embodiment of the instant invention, which may be different from the embodiment described above, the alternating electrical field applied to align the liquid crystal material is preferably lower than the critical field for helix unwinding. For practical reasons it is preferably 12 V/m or less and most preferably 4 V/m or less.

In a further preferred embodiment of the instant invention, which may be different from the embodiments described above, a liquid crystal cell with surfaces treated for planar alignment is used. In this embodiment the preferred starting condition for the orientation of the liquid crystal material is the Grandjean texture. In this embodiment, which is independent from the two previous embodiments, the strength of the aligning field is applied, ramped up and / or increased gradually at the critical field only for the helix unwinding. This allows for true homeotropic alignment in case the liquid crystal material has a positive dielectric anisotropy, which is generally preferred in this application and especially in the instant embodiment. Then the aligning field is decreased gradually from its maximum value, preferably the critical field, until a good uniform lying helix alignment is achieved; over a defined time span. This time span preferably is in the range of 1 second to 2 hours, more preferably in the range of 1 second to 600 seconds and most preferably in the range from 1 second to 60 seconds. For reasons of productivity the time span should be as short as possible, while a sufficient time has to be allowed to ensure proper orientation.

A sweeping speed of 20 V/(μm·min) has been found useful in most cases.

The chiral nematic phase of the liquid crystal materials preferably extends over a range of 10 degrees centigrade or more, preferably over a range of 20 degrees centigrade or more and most preferably over a range 30 degrees centigrade or more

The sequence of textures typically observed in a sample of an inventive medium upon application of an electric field is as follows:

Scheeme 1: Phase sequence during orientation

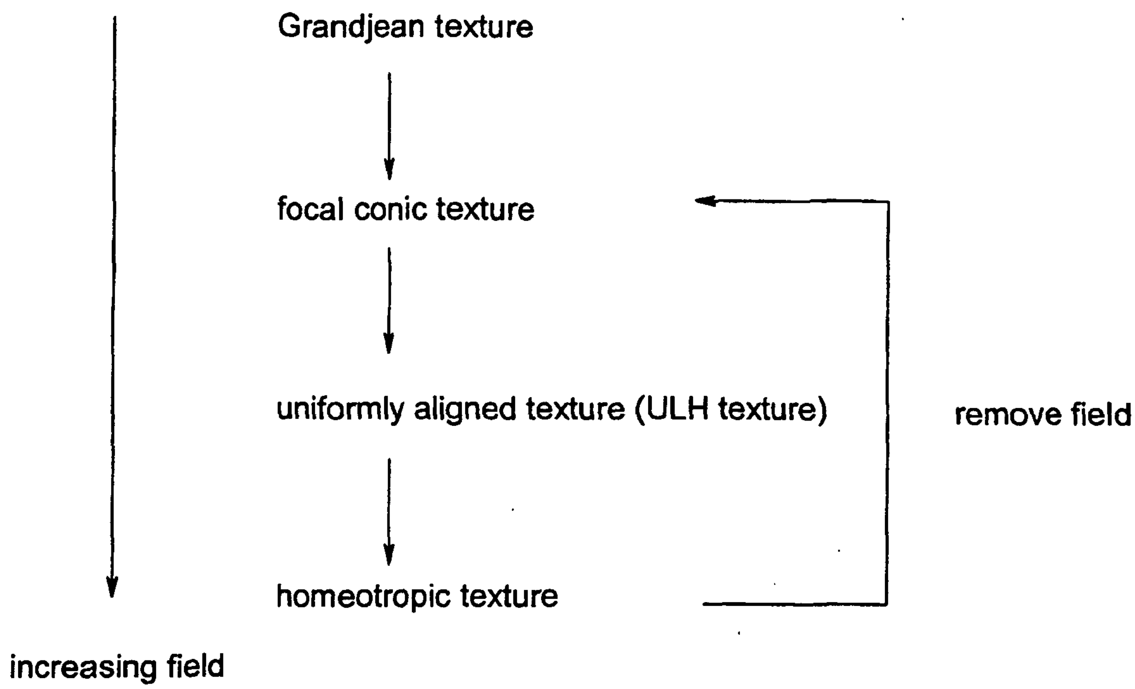


Comprising in this application means in the context of compositions that the entity referred to, e.g. the medium or the component, contains the component or components or of the compound or compounds in question, preferably in a total concentration of 10 % or more and most preferably of 20 % or more.

Predominantly consisting, in this context, means that the entity referred to contains 80 % or more, preferably 90 % or more and most preferably 95 % or more of the component or components or of the compound or compounds in question.

Entirely consisting, in this context, means that the entity referred to contains 98 % or more, preferably 99 % or more and most preferably 100.0 % of the component or components or of the compound or compounds in question.

Also other mesogenic, as well as nonmesogenic, compounds, which are not explicitly mentioned above, can optionally and in certain cases beneficially be used in the media according to the instant invention. Such compounds are known to the expert in the field.

Component A preferably is used in a concentration from 90% to 99.9 %, preferably from 90% to 95 %.

Component B preferably is used in a concentration from 0.1 % to 10 %, preferably from 0.1 % to 5% of the total mixture.

Optionally, the media to be used in the inventive displays can comprise further liquid crystal compounds in order to adjust the physical properties. Such compounds are known to the expert. Their concentration in the media according to the instant invention is preferably 0 % to 99.9 %.

Preferably the liquid crystal medium to be used according to the present invention contains 50 % to 100 %, more preferably 70 % to 100 % and most preferably 80 % to 100 % and in particular 90 % to 100 % totally of components A and B, which contain, preferably predominantly consist of and most preferably entirely consist of one or more of compounds of formulae I-1 to I-3, I'-1 to I'-3, II-1, II-2 and III, respectively.

The $\Delta n$ of the liquid crystal media to be used according to the instant invention is 0.215 or more, preferably in the range of 0.100 to 0.300.

The $\Delta\varepsilon$, at 1 kHz and 20 °C, of the liquid crystal media to be used according to the invention is 0 or more,

preferably 5 or more and preferably 12 or less.

The liquid crystal media to be used according to the instant invention are typically characterised by clearing points of between 100°C and 150°C or even more.

The nematic phase of the liquid crystal media to be used according to the instant do preferably extend to less than 20°C or less, more preferably 15°C or less, most preferably 10°C or less, especially 5°C or less.

Preferably the nematic phase of the media to be used in the inventive displays extends at least from -50°C to 100 °C, wherein at least means that preferably the lower limit is under cut, wherein the upper limit is surpassed.

In the present application the term dielectrically positive compounds describes compounds with $\Delta\varepsilon > 3.0$, dielectrically neutral compounds are compounds with $-1.5 \leq \Delta\varepsilon \leq 3.0$ and dielectrically negative compounds are compounds with $\Delta\varepsilon < -1.5$. The same holds for components. $\Delta\varepsilon$ is determined at 1 kHz and 20 °C. The dielectrical anisotropies of the compounds are determined from the results of a solution of 10 % of the individual compounds in a nematic host mixture. The capacities of these test mixtures are determined both in a cell with homeotropic and with homogeneous alignment. The cell gap of both types of cells is approximately 10 µm. The voltage applied is a rectangular wave with a frequency of 1 kHz and a root mean square value typically of 0.5 V to 1.0 V. However, it is always selected to be below the capacitive threshold of the respective test mixture.

For dielectrically positive compounds the mixture ZLI-4792 and for dielectrically neutral, as well as for dielectrically negative compounds, the mixture ZLI-3086, both of Merck KGaA, Germany are used as host mixture, respectively. The dielectric permittivities of the compounds are determined from the change of the respective values of the host mixture upon addition of the compounds of interest and are extrapolated to a concentration of the compounds of interest of 100 %. Components having a nematic phase at the measurement temperature of 20 °C are measured as such. All others are treated like compounds.

The term threshold voltage refers in the instant application to the optical threshold and is given for 10 % relative contrast ($V_{10}$) and the term saturation voltage refers to the optical saturation and is given for 90 % relative contrast ($V_{90}$) both, if not explicitly stated otherwise. The capacitive threshold voltage ($V_0$, also called Freedericksz-threshold $V_{Fr}$) is only used if explicitly mentioned.

The ranges of parameters given in this application are all including the limiting values, unless explicitly stated otherwise.

Throughout this application, unless explicitly stated otherwise, all concentrations are given in mass percent and relate to the respective complete mixture, all temperatures are given in degrees centigrade (Celsius) and all differences of temperatures in degrees centigrade. The two expressions, room temperature and ambient temperature both do refer to a temperature of 20°C, unless explicitly stated otherwise. All physical properties have been and are determined according to "Merck Liquid Crystals, Physical Properties of Liquid Crystals", Status Nov. 1997, Merck KGaA, Germany and are given for a temperature of 20 °C, unless explicitly stated otherwise. The properties of the flexoelectric materials are given at a temperature of 10 degrees centigrade below the clearing temperature of the respective material. The optical anisotropy ($\Delta n$) is determined at a wavelength of 589.3 nm. The dielectric anisotropy ($\Delta\varepsilon$) is determined at a frequency of 1 kHz. The threshold voltages, as well as all other electro-optical properties, have been determined with test cells prepared at EEV, UK. The test cells for the determination of $\Delta\varepsilon$ had a cell gap of 22 µm. The electrode was a circular ITO electrode with an area of 1.13 $cm^2$ and a guard ring. The orientation layers were lecithin for homeotropic orientation ($\varepsilon_{||}$) and polyimide AL-1054 from Japan Synthetic Rubber for homogeneous orientation ($\varepsilon_{\perp}$). The capacities were determined with a frequency response analyser Solatron 1260 using a sine wave with a voltage of 0.3 $V_{rms}$. The light used in the electro-optical measurements was white light. The set up used was a commercially available equipment of Otsuka, Japan. The characteristic voltages have been determined under perpendicular observation. The threshold ($V_{10}$) - mid grey ($V_{50}$) - and saturation ($V_{90}$) voltages have been determined for 10 %, 50 % and 90 % relative contrast, respectively.

The liquid crystal media according to the present invention can contain further additives and chiral dopants in usual concentrations. The total concentration of these further constituents is in the range of 0 % to 10 %, preferably 0.1 % to 6 %, based on the total mixture. The concentrations of the individual compounds used each are preferably in the range of 0.1 % to 3 %. The concentration of these and of similar additives is not taken into consideration for the values and ranges of the concentrations of the liquid crystal components and compounds of the liquid crystal media in this application.

The inventive liquid crystal media according to the present invention consist of several compounds, preferably of 3 to 30, more preferably of 8 to 20 and most preferably of 10 to 16 compounds.

These compounds are mixed in conventional way. As a rule, the required amount of the compound used in the smaller amount is dissolved in the compound used in the greater amount. In case the temperature is above the clearing point of the compound used in the higher concentration, it is particularly easy to observe completion of the process of dissolution. It is, however, also possible to prepare the media by other conventional ways, e. g. using so called pre-mixtures, which can be e. g. homologous or eutectic mixtures of compounds or using so called multi-bottle-systems, the constituents of which are ready to use mixtures themselves.

The orientation of the liquid crystal media according to the present invention in the inventive cells is typically achieved by treating the major inner surfaces of the cell opposing each other with an aligning means for homogeneous alignment and application of an electrical field to the filled cell. The means for homeotropic orientation is an inorganic layer with a preferred direction, like e.g. obliquely evaporated $SiO_x$ or an organic layer, typically a polymeric layer, having a preferred direction, like a unidirectionally rubbed polyimide or polyamide film.

The melting point T(C,N), the transition from the smectic (S) to the nematic (N) phase T(S,N) and the clearing point T (N,I) of the liquid crystals are given in degrees centigrade.

In the present application and especially in the following examples, the structures of the liquid crystal compounds are represented by abbreviations also called acronyms. The transformation of the abbreviations into the corresponding structures is straight forward according to the following table A. All groups $C_nH_{2n+1}$ and $C_mH_{2m+1}$ are straight chain alkyl groups with n respectively m C-atoms.

**<u>Table A:</u>**

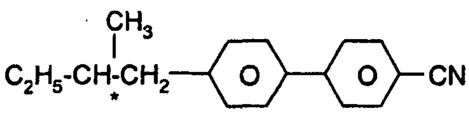

**CB15**

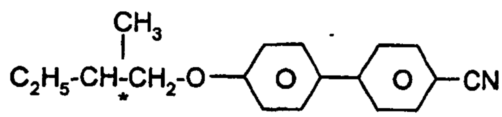

**C15**

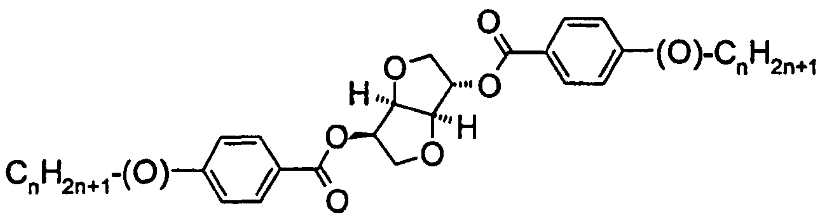

**(n(O)-PZ)$_2$X***

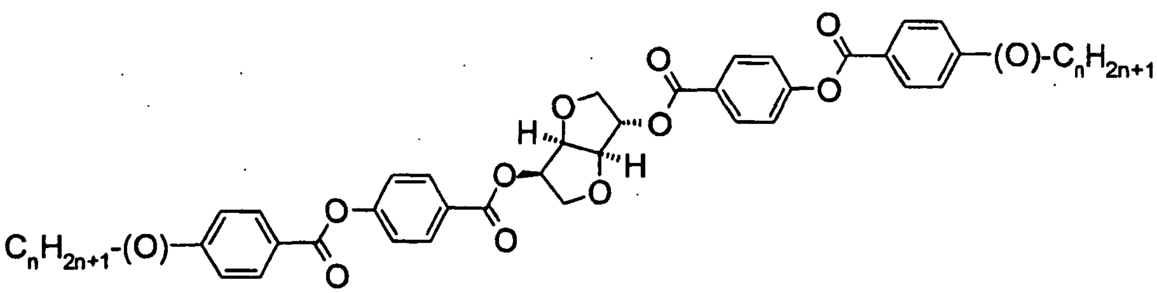

**(n(O)-PZPZ)$_2$X***

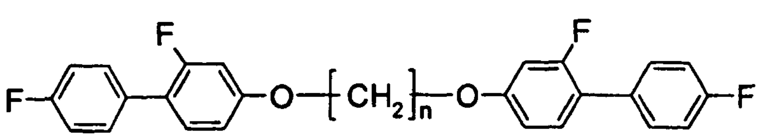

**n(OGP-F)$_2$**

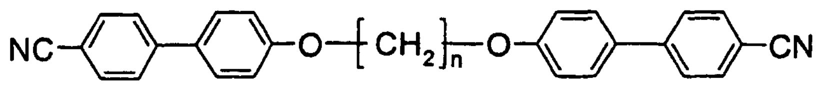

n(OPP-N)$_2$

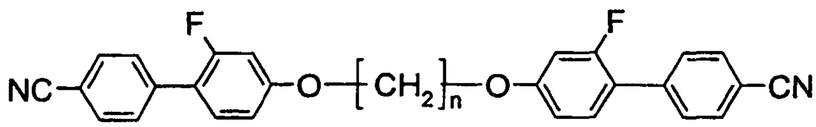

n(OGP-N)$_2$

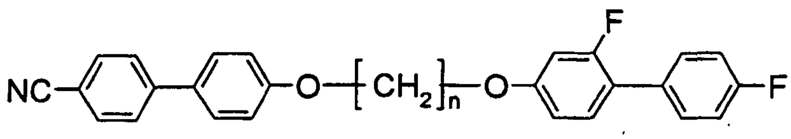

n (OGP-F) (OPP-N)

The liquid crystal media according to the instant invention do contain preferably

- two or more, preferably three or more compounds, preferably of at least two, preferably three, different formulae, selected from the group of compounds of formulae of table A.

Examples

The examples given in the following are intended to illustrate the present invention without limiting its scope in any way.

However, they illustrate typical preferred embodiments. They show the use of typical and preferred constituents and exemplarily illustrate their concentrations. Further, they show possible variations of the phyiscal properties of the products and devices, illustrating to the expert which properties can be achieved and in which ranges they can be modified. Especially they show the expert the combination of the various properties that can be preferably achieved.

Examples 1 to 5

In examples 1 to 4 four liquid crystalline compounds were doped each with 3.5 %, respectively 3.75 %, of the chiral compound $(1O\text{-}PZPZ)_2X^*$, see the table below (table 1). A binary mixture of two of these compounds, 52% of the second and 48% of the third compound, was also prepared and doped with 3.5% of the same chiral compound (example 5). The compositions of the five final mixtures are given in the following table.

Table 1:

| Compositions of cholesteric compositions | | | | | |
|---|---|---|---|---|---|
| Compound | N-PP-O***n***O-GP-F | | | | $(1O\text{-}PZPZ)_2X^*$ |
| ***n*** | 5 | 7 | 9 | 11 | |
| Example No. | c / % | | | | |
| 1 | 96.5 | -/- | -/- | -/- | 3.5 |
| 2 | -/- | 96.5 | -/- | -/- | 3.5 |
| 3 | -/- | -/- | 96.25 | -/- | 3.75 |
| 4 | -/- | -/- | -/- | 96.5 | 3.5 |
| 5 | -/- | 50.18 | 46.32 | -/- | 3.5 |

The phase ranges of all of these five liquid crystal materials were determined using a differential scanning calorimeter in the heating run. The materials of examples 1 and 2 did exhibit blue phases. The results are listed in table 2 below together with the other physical properties.

Table 2:

| Physical properties of cholesteric compositions | | | | |
|---|---|---|---|---|
| Example No. | Phase sequence T(i,j) / °C | Pitch / nm | Alignment by electrical field | $E_c$/V/µm |
| 1+ | C 93 N* 106 I | 264 | Yes | 10.8 |
| 2+ | C 96 N* 114 I | 292 | Yes | 15.3 |
| 3+ | C 74 N* 111 I | 290 | Yes | 17.9 |
| 4+ | C 73 N* 112 I | 321 | Yes | 15.2 |
| 5 | C n.d. N* 114 I | 364 | Yes | 10.8 |
| Remarks:<br>X*: chiral group X; C: crystalline phase;<br>N*: chiral nematic phase; I: isotropic phase;<br>+: shows blue phase; n.d.: not determined. | | | | |

Next, the cholesteric pitch ($P_0$) of the materials was determined by the method of selective reflection (calculated from the wavelength of the maximum of the selective reflection ($\lambda_r$) by equation (6)

$$P_0 = 2\lambda_r(n_e+n_o)) \qquad (6)$$

with an estimated accuracy of P = +/- 5 nm at a temperature of 10 degrees below the clearing point of the material.

Then all of these five liquid crystal materials were introduced into standard anti-parallel aligned cells supplied by EEV, UK having a thickness in the range from 4 µm to 7 µm.

Their orientation behaviour upon application of an alternating electrical field, with field strengths in the range of 0 $V_{rms}$ to 100 $V_{rms}$, was investigated and all samples were found easy to orient in the cholesteric phase. Subsequently the critical field for unwinding of the cholesteric helix was determined at a temperature of 10 degrees Centigrade below the clearing point.

<u>Comparative examples</u>

A mixture of 96.5 % of 10$(OGP\text{-}F)_2$ with 3.5 % of $(10\text{-}PZPZ)_2X^*$ was prepared. The resulting mixture has a phase sequence of Cr 113 N* 133 I. The cholesteric pitch was 420 nm. This mixture could not be aligned by application of an electric field only. It could be aligned by additional mechanical shearing. The critical field $E_c$ was 13.8 V/µm.

## Claims

**1.** Liquid crystal display comprising

- a pair of substrates
    - each bearing one or more electrodes and
    - at least one of them bearing an orientation layer for planar alignment of liquid crystals or being otherwise treated for planar orientation of liquid crystals,
- a cholesteric liquid crystal material comprising
    - a component A, comprising one or more bimesogenic compounds with an odd number of atoms in the spacer group between the two mesogenic units and with a non-symmetric structure,
    - a chiral component B consisting of one or more compounds, wherein
    - the cholesteric liquid crystal material is aligned in a uniformly lying helix structure with a helical pitch of

500nm or less, **characterized in that** the following conditions are satisfied

- the second substrate is bearing an orientation layer for homeotropic alignment of liquid crystals or being otherwise treated for homeotropic alignment of liquid crystals.

**2.** Liquid crystal display according to claim 1, **characterized in that** the liquid crystal material exhibits a blue phase.

**3.** Liquid crystal display according to at least one of claims 1 and 2, **characterized in that** the concentration of the component B in the liquid crystal material is 1% or more.

**4.** Liquid crystal display according to at least one of claims 1 to 3, **characterized in that** the substrates are treated to give liquid crystal materials a hybrid alignment.

**5.** Liquid crystal display according to at least one of claims 1 to 4, **characterized in that** it the orientation of the liquid crystal material in the uniformly lying helix texture is achieved by application of an alternating electrical field.

**6.** Liquid crystal display according to claims 5, **characterized in that** the orientation of the liquid crystal material in the uniformly lying helix texture is achieved by application of an alternating electrical field at a temperature at which the liquid crystal material is in the blue phase.

**7.** Liquid crystal display according to at least one of claims 1 to 6, **characterized in that** it is used to display video images.

**8.** Liquid crystal device, **characterized in that** it comprises a liquid crystal medium according to at least one of claims 1 to 7.

**9.** Liquid crystal device according to claim 8, **characterized in that** it is an electro-optical display.

**10.** Use of a liquid crystal display according to at least one of claims 1 to 7 in a liquid crystal device.

**11.** Cholesteric liquid crystal material as defined in at least one of claims 1 to 3.

**Patentansprüche**

**1.** Flüssigkristallanzeige enthaltend:

- ein Paar von Substraten
  - wobei jedes eine oder mehrere Elektroden trägt und
  - mindestens eines von ihnen eine Orientierungsschicht zur planaren Ausrichtung von Flüssigkristallen trägt oder in anderer Weise für die planare Orientierung von Flüssigkristallen behandelt worden ist,
- ein cholesterisches Flüssigkristallmaterial enthaltend
  - eine Komponente A, enthaltend eine oder mehrere bimesogene Verbindungen mit einer ungeraden Anzahl von Atomen in der Spacergruppe zwischen den beiden mesogenen Einheiten und mit einer unsymmetrischen Struktur,
  - eine chirale Komponente B, die aus einer oder mehreren Verbindungen besteht, worin
  - das cholesterische Flüssigkristallmaterial in einer ULH-Struktur mit einer Helixganghöhe von 500 nm oder weniger ausgerichtet ist, **dadurch gekennzeichnet, dass** die folgenden Bedingungen erfüllt werden:
- das zweite Substrat trägt eine Orientierungsschicht für die homöotrope Ausrichtung von Flüssigkristallen oder ist in anderer Weise für die homöotrope Ausrichtung von Flüssigkristallen behandelt worden.

**2.** Flüssigkristallanzeige nach Anspruch 1, **dadurch gekennzeichnet, dass** das Flüssigkristallmaterial eine blaue Phase aufweist.

3. Flüssigkristallanzeige nach mindestens einem der Ansprüche 1 und 2, **dadurch gekennzeichnet, dass** die Konzentration der Komponente B in dem Flüssigkristallmaterial 1 % oder mehr beträgt.

4. Flüssigkristallanzeige nach mindestens einem der Ansprüche 1 bis 3, **dadurch gekennzeichnet, dass** die Substrate behandelt werden, um den Flüssigkristallmaterialien eine hybride Ausrichtung zu verleihen.

5. Flüssigkristallanzeige nach mindestens einem der Ansprüche 1 bis 4, **dadurch gekennzeichnet, dass** die Orientierung des Flüssigkristallmaterials in der ULH-Struktur durch Anlegen eines Wechselstromfeldes erreicht wird.

6. Flüssigkristallanzeige nach Anspruch 5, **dadurch gekennzeichnet, dass** die Orientierung des Flüssigkristallmaterials in der ULH-Struktur durch Anlegen eines Wechselstromfeldes bei einer Temperatur, bei der das Flüssigkristallmaterial sich in der blauen Phase befindet, erreicht wird.

7. Flüssigkristallanzeige nach mindestens einem der Ansprüche 1 bis 6, **dadurch gekennzeichnet, dass** sie verwendet wird, um Videobilder anzuzeigen.

8. Flüssigkristallvorrichtung, **dadurch gekennzeichnet, dass** sie ein Flüssigkristallmedium nach mindestens einem der Ansprüche 1 bis 7 enthält.

9. Flüssigkristallvorrichtung nach Anspruch 8, **dadurch gekennzeichnet, dass** sie eine elektrooptische Anzeige ist.

10. Verwendung einer Flüssigkristallanzeige nach mindestens einem der Ansprüche 1 bis 7 in einer Flüssigkristallvorrichtung.

11. Cholesterisches Flüssigkristallmaterial wie in mindestens einem der Ansprüche 1 bis 3 definiert.

**Revendications**

1. Affichage à cristaux liquides comprenant

- une paire de substrats

  - chacun étant porteur d'une ou de plusieurs électrodes ; et
  - au moins l'un d'entre eux étant porteur d'une couche d'orientation pour un alignement plan de cristaux liquides ou étant traité de toute autre façon pour une orientation plane de cristaux liquides,

- un matériau de cristal liquide cholestérique comprenant

  - un composant A qui comprend un ou plusieurs composés bi-mésogènes moyennant un nombre impair d'atomes dans le groupe d'espaceur entre les deux unités mésogènes et moyennant une structure non symétrique,
  - un composant chiral B qui est constitué par un ou plusieurs composés,

  dans lequel

  - le matériau de cristal liquide cholestérique est aligné selon une structure en hélice s'étendant uniformément moyennant un pas d'hélice de 500 nm ou moins,

  **caractérisé en ce que** les conditions qui suivent sont satisfaites :

- le second substrat est porteur d'une couche d'orientation pour un alignement homéotrope de cristaux liquides ou est traité de toute autre façon pour un alignement homéotrope de cristaux liquides.

2. Affichage à cristaux liquides selon la revendication 1, **caractérisé en ce que** le matériau de cristal liquide présente une phase bleue.

3. Affichage à cristaux liquides selon au moins l'une des revendications 1 et 2, **caractérisé en ce que** la concentration

en le composant B dans le matériau de cristal liquide est de 1 % ou plus.

4. Affichage à cristaux liquides selon au moins l'une des revendications 1 à 3, **caractérisé en ce que** les substrats sont traités afin de conférer un alignement hybride à des matériaux de cristal liquide.

5. Affichage à cristaux liquides selon au moins l'une des revendications 1 à 4, **caractérisé en ce que** l'orientation du matériau de cristal liquide dans la texture en hélice s'étendant uniformément est réalisée au moyen de l'application d'un champ électrique alternatif.

6. Affichage à cristaux liquides selon la revendication 5, **caractérisé en ce que** l'orientation du matériau de cristal liquide dans la texture en hélice s'étendant uniformément est réalisée au moyen de l'application d'un champ électrique alternatif à une température à laquelle le matériau de cristal liquide est dans la phase bleue.

7. Affichage à cristaux liquides selon au moins l'une des revendications 1 à 6, **caractérisé en ce qu'**il est utilisé pour afficher des images vidéo.

8. Dispositif à cristaux liquides, **caractérisé en ce qu'**il comprend un milieu de cristal liquide selon au moins l'une des revendications 1 à 7.

9. Dispositif à cristaux liquides selon la revendication 8, **caractérisé en ce qu'**il est un affichage électro-optique.

10. Utilisation d'un affichage à cristaux liquides selon au moins l'une des revendications 1 à 7 dans un dispositif à cristaux liquides.

11. Matériau de cristal liquide cholestérique comme défini selon au moins l'une des revendications 1 à 3.